# EUROPEAN PATENT APPLICATION

(11) **EP 3 456 751 A1**
(43) Date of publication of application: **20.03.2019**
(21) Application number: 17191246.2
(22) Date of filing: 15.09.2017
(51) Int. Cl.: C08F 293/00, C09D 153/00, C08F 214/22

(54) **METHOD FOR COATING A SUBSTRATE USING FLUORINATED BLOCK COPOLYMERS**

(71) Applicant: Solvay Specialty Polymers Italy S.p.A., 20021 Bollate (MI) (IT)
(72) Inventor: IEVA, Eliana, 15121 Alessandria (AL) (IT); RONCATI, Fulvia, 15121 Alessandria (AL) (IT); AVATANEO, Marco, 20030 Senago (Milano) (IT); DOSSI, Marco, 20162 Milano (MI) (IT); PONTA, Laura, 20159 Milano (MI) (IT)
(74) Representative: Benvenuti, Federica

(57) **Abstract**

The invention pertains to a method for manufacturing a coating layer onto the surface of a substrate, using a fluorinated thermoplastic elastomer, delivering outstanding adhesion to the substrate and formation of a flexible and chemically resistant coating.

## Description

### Technical Field

The present invention is directed towards a method for coating a substrate with a rubbery fluoropolymer, whereas use is made of a thermoplastic fluorinated elastomeric block copolymer, delivering outstanding adhesion and mechanical performances.

### Background Art

Fluorocarbon elastomers are widely known as exhibiting resistance to heat, aliphatic and aromatic hydrocarbons, chlorinated solvents, petroleum fluids and many mineral acids. Although not universally resistant to solvents or chemicals, their resistance to such compounds is superior to most other elastomers. They can be processed with existing technology and apparatus into solid or solid walled articles, however, given their relatively high cost, use of fluoroelastomers has been somewhat curtailed and directed more to specialty applications. Beside solid and sponged fluoroelastomer products, also industries are using fluoroelastomer-based coatings for covering metals, fabrics, concrete, plastics and rubbers with a heat and chemical resistant flexible protective layer.

Known fluoroelastomer curable compositions comprise the fluorocarbon elastomer or gum, a metal oxide, a filler, curing agents and processing aids. Converting the rubbery raw gum fluoroelastomer to vulcanizates requires primary crosslinking or curing agents such as the amines, dithiols, peroixdes or certain aromatic polyhydroxy compounds. Alternatively, radiation can be used. With each of these systems a basic metal oxide is required, such as the oxides of magnesium, calcium, lead or zinc, as an acid acceptor.

To formulate a fluoroelastomer for coating purposes, it is customary to mix the gum with desired filler and metallic oxide on a mill, and working the additives well into the gum. After removal from the mill, a solvent such as a low molecular weight ester or ketone is added followed by a suitable curative, such as a polyol or an amine compound. Water-borne fluoroelastomer coating compositions have been also proposed in the past, combined with specific curatives active in water medium.

When used as a coating, several problems exist. A primary one is adhesion; pre-treatment of the substrate is generally required including cleaning and priming operations. Working life or pot-life of coating formulations is usually relatively low requiring the manufacturer to compound the fluoroelastomer and use it the same day, often within hours: indeed, the curative compound comprised in the formulation initiate crosslinking, so that gelling may occur within relatively short time-frame. Another problem is that settling of the metallic oxide may occur during use of the coating material, giving a non-uniform dispersion of the metallic oxide and non-uniform cure.

Of the systems and techniques known in the art, none has provided a composition readily adherable to a plurality of substrates, providing a flexible coating and without loss of the inherent chemical resistance possessed by the fluoroelastomer.

On the other side, fluorinated thermoplastic elastomers generally possessing a blocky structure including one or more fluoroelastomeric block(s) and one or more fluorothermoplast block(s) are known. Although no specific examples has been disclosed, the possibility of using the same for formulating coating compositions has been notably mentioned in US 6153681 (DUPONT) 28.11.2000 and US 4158678 (DAIKIN) 19.06.1979.

### Summary of invention

The Applicant has now surprisingly found that certain coating compositions comprising fluorinated thermoplastic elastomers, as below detailed, are such to address and cope the challenging requirements expressed above for being processed under certain conditions through coating techniques, providing for improved adhesion to substrates (in particular metal substrate), and yet delivering protective layers with outstanding chemical and thermal resistance, and outstanding flexibility.

The present invention hence is directed to a method for forming an assembly including a coating layer [layer (L)] adhered at least a part of the surface [surface (S)] of a substrate, said method comprising:
- forming a wet coating layer [layer (WC)] onto at least a part of said surface (S) by coating a composition (C) [composition (C)] onto at least a part of said surface, said composition (C) comprising a liquid medium and at least one fluorinated thermoplastic elastomer [polymer (F-TPE)] comprising:
   (i) at least one elastomeric block (A) consisting of a sequence of recurring units, said sequence comprising recurring units derived from at least one fluorinated monomer, said block (A) possessing a glass transition temperature of less than 25°C, as determined according to ASTM D3418, and
   (ii) at least one thermoplastic block (B) consisting of a sequence of recurring units, said sequence comprising recurring units derived from at least one fluorinated monomer,
   wherein the crystallinity of said block (B) and its weight fraction in the polymer (F-TPE) are such to provide for a heat of fusion of the polymer (F-TPE) of at least 2.5 J/g, when determined according to ASTM D3418; and
- drying and heat treating at a temperature of at least 150°C the said layer (WC) onto said surface (S) to form said layer (L).

The invention further pertains to an assembly including a coating layer [layer (L)] adhered at least a part of the surface [surface (S)] of a substrate, whereas the layer (L) is made from a composition comprising at least one fluorinated thermoplastic elastomer [polymer (F-TPE)] comprising:
(i) at least one elastomeric block (A) consisting of a sequence of recurring units, said sequence comprising recurring units derived from at least one fluorinated monomer, said block (A) possessing a glass transition temperature of less than 25°C, as determined according to ASTM D3418, and
(ii) at least one thermoplastic block (B) consisting of a sequence of recurring units, said sequence comprising recurring units derived from at least one fluorinated monomer,
wherein the crystallinity of said block (B) and its weight fraction in the polymer (F-TPE) are such to provide for a heat of fusion of the polymer (F-TPE) of at least 2.5 J/g, when determined according to ASTM D3418; and
wherein said coating layer possesses an adhesion of at least 80 % retained adhered coating, when determined via the cross cut test, according to ASTM D3359.

### Description of embodiments

### The fluorinated thermoplastic elastomer [polymer (F-TPE)]

For the purpose of the present invention, the term "elastomeric", when used in connection with the "block (A)" is hereby intended to denote a polymer chain segment which, when taken alone, is substantially amorphous, that is to say, has a heat of fusion of less than 2.0 J/g, preferably of less than 1.5 J/g, more preferably of less than 1.0 J/g, as measured according to ASTM D3418.

For the purpose of the present invention, the term "thermoplastic", when used in connection with the "block (B)", is hereby intended to denote a polymer chain segment which, when taken alone, is semi-crystalline, and possesses a detectable melting point, with an associated heat of fusion of exceeding 10.0 J/g, as measured according to ASTM D3418.

The fluorinated thermoplastic elastomer of the composition (C) of the invention is advantageously a block copolymer, said block copolymer typically having a structure comprising at least one block (A) alternated to at least one block (B), that is to say that said fluorinated thermoplastic elastomer typically comprises, preferably consists of, one or more repeating structures of type (B)-(A)-(B). Generally, the polymer (F-TPE) has a structure of type (B)-(A)-(B), i.e. comprising a central block (A) having two ends, connected at both ends to a side block (B).

The block (A) is often alternatively referred to as soft block (A); the block (B) is often alternatively referred to as hard block (B).

The term "fluorinated monomer" is hereby intended to denote an ethylenically unsaturated monomer comprising at least one fluorine atom.

The fluorinated monomer may further comprise one or more other halogen atoms (Cl, Br, I).

Any of block(s) (A) and (B) may further comprise recurring units derived from at least one hydrogenated monomer, wherein the term "hydrogenated monomer" is intended to denote an ethylenically unsaturated monomer comprising at least one hydrogen atom and free from fluorine atoms.

The polymer (F-TPE) typically comprises, preferably consists of:
- at least one elastomeric block (A) selected from the group consisting of:
   (1) vinylidene fluoride (VDF)-based elastomeric blocks (A_{VDF}) consisting of a sequence of recurring units, said sequence comprising recurring units derived from VDF and recurring units derived from at least one fluorinated monomer different from VDF, said fluorinated monomer different from VDF being typically selected from the group consisting of:
      (a) C₂-C₈ perfluoroolefins such as tetrafluoroethylene (TFE), hexafluoropropylene (HFP);
      (b) hydrogen-containing C₂-C₈ fluoroolefins different from VDF, such as vinyl fluoride, trifluoroethylene (TrFE), hexafluoroisobutylene (HFIB), perfluoroalkyl ethylenes of formula CH₂=CH-R_{f1}, wherein R_{f1} is a C₁-C₆ perfluoroalkyl group;
      (c) C₂-C₈ chloro- and/or bromo-containing fluoroolefins such as chlorotrifluoroethylene (CTFE);
      (d) perfluoroalkylvinylethers (PAVE) of formula CF₂=CFOR_{f1}, wherein R_{f1} is a C₁-C₆ perfluoroalkyl group, such as CF₃ (PMVE), C₂F₅ or C₃F₇;
      (e) perfluorooxyalkylvinylethers of formula CF₂=CFOX₀, wherein X₀ is a a C₁-C₁₂ perfluorooxyalkyl group comprising one or more than one ethereal oxygen atom, including notably perfluoromethoxyalkylvinylethers of formula CF₂=CFOCF₂OR_{f2}, with R_{f2} being a C₁-C₃ perfluoro(oxy)alkyl group, such as -CF₂CF₃, -CF₂CF₂-O-CF₃ and -CF₃; and
      (f) (per)fluorodioxoles of formula: 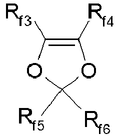 wherein each of R_{f3}, R_{f4}, R_{f5} and R_{f6}, equal to or different from each other, is independently a fluorine atom, a C₁-C₆ perfluoro(oxy)alkyl group, optionally comprising one or more oxygen atoms, such as -CF₃, -C₂F₅, -C ₃F₇, -OCF₃ or -OCF₂CF₂OCF₃; and
   (2) tetrafluoroethylene (TFE)-based elastomeric blocks (A_{TFE}) consisting of a sequence of recurring units, said sequence comprising recurring units derived from TFE and recurring units derived from at least one fluorinated monomer different from TFE, said fluorinated monomer being typically selected from the group consisting of those of classes (b), (c), (d), (e) as defined above;
- at least one thermoplastic block (B) consisting of a sequence of recurring units derived from at least one fluorinated monomer.

Any of block(s) (A_{VDF}) and (A_{TFE}) may further comprise recurring units derived from at least one hydrogenated monomer, which may be selected from the group consisting of C₂-C₈ non-fluorinated olefins such as ethylene, propylene or isobutylene.

The elastomeric block (A) is preferably a block (A_{VDF}), as above detailed, said block (A_{VDF}) typically consisting of a sequence of recurring units comprising, preferably consisting of:
- from 45% to 80% by moles of recurring units derived from vinylidene fluoride (VDF),
- from 5% to 50% by moles of recurring units derived from at least one fluorinated monomer different from VDF,
- optionally, up to 1.0 % by moles of recurring units derived from at least one bis-olefin (OF), as above detailed; and
- optionally, up to 30% by moles of recurring units derived from at least one hydrogenated monomer,
with respect to the total moles of recurring units of the sequence of block (A_{VDF}).

The elastomeric block (A) may further comprise recurring units derived from at least one bis-olefin [bis-olefin (OF)] of formula:

R_{A}R_{B}=CR_{C}-T-CR_{D}=R_{E}R_{F}

wherein R_{A}, R_{B}, R_{C}, R_{D}, R_{E} and R_{F}, equal to or different from each other, are selected from the group consisting of H, F, Cl, C₁-C₅ alkyl groups and C₁-C₅ (per)fluoroalkyl groups, and T is a linear or branched C₁-C₁₈ alkylene or cycloalkylene group, optionally comprising one or more than one ethereal oxygen atom, preferably at least partially fluorinated, or a (per)fluoropolyoxyalkylene group.

The bis-olefin (OF) is preferably selected from the group consisting of those of any of formulae (OF-1), (OF-2) and (OF-3):
(OF-1) 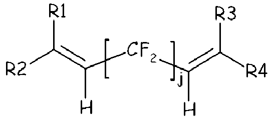 wherein j is an integer comprised between 2 and 10, preferably between 4 and 8, and R1, R2, R3 and R4, equal to or different from each other, are selected from the group consisting of H, F, C₁-C₅ alkyl groups and C₁-C₅ (per)fluoroalkyl groups;
(OF-2) 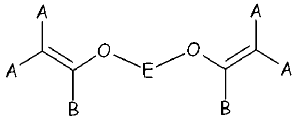 wherein each of A, equal to or different from each other and at each occurrence, is independently selected from the group consisting of H, F and Cl; each of B, equal to or different from each other and at each occurrence, is independently selected from the group consisting of H, F, Cl and OR_{B}, wherein R_{B} is a branched or straight chain alkyl group which may be partially, substantially or completely fluorinated or chlorinated, E is a divalent group having 2 to 10 carbon atoms, optionally fluorinated, which may be inserted with ether linkages; preferably E is a -(CF₂)ₘ- group, wherein m is an integer comprised between 3 and 5; a preferred bis-olefin of (OF-2) type is F₂C=CF-O-(CF₂)₅-O-CF=CF₂;
(OF-3) 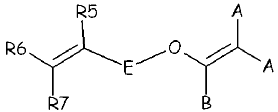 wherein E, A and B have the same meaning as defined above, R5, R6 and R7, equal to or different from each other, are selected from the group consisting of H, F, C₁-C₅ alkyl groups and C₁-C₅ (per)fluoroalkyl groups.

Should the block (A) consist of a recurring units sequence further comprising recurring units derived from at least one bis-olefin (OF), said sequence typically comprises recurring units derived from the said at least one bis-olefin (OF) in an amount comprised between 0.01% and 1.0% by moles, preferably between 0.03% and 0.5% by moles, more preferably between 0.05% and 0.2% by moles, based on the total moles of recurring units of block (A).

Block (B) may consist of a sequence of recurring units, said sequence comprising:
- recurring units derived from one or more than one fluoromonomer, preferably selected from the group consisting of:
   (a) C₂-C₈ perfluoroolefins such as tetrafluoroethylene (TFE), hexafluoropropylene (HFP);
   (b) hydrogen-containing C₂-C₈ fluoroolefins, such as vinylidene fluoride (VDF), vinyl fluoride, trifluoroethylene (TrFE), hexafluoroisobutylene (HFIB), perfluoroalkyl ethylenes of formula CH₂=CH-R_{f1}, wherein R_{f1} is a C₁-C₆ perfluoroalkyl group;
   (c) C₂-C₈ chloro- and/or bromo-containing fluoroolefins such as chlorotrifluoroethylene (CTFE);
   (d) perfluoroalkylvinylethers (PAVE) of formula CF₂=CFOR_{f1}, wherein R_{f1} is a C₁-C₆ perfluoroalkyl group, such as CF₃ (PMVE), C₂F₅ or C₃F₇;
   (e) perfluorooxyalkylvinylethers of formula CF₂=CFOX₀, wherein X₀ is a a C₁-C₁₂ perfluorooxyalkyl group comprising one or more than one ethereal oxygen atom, including notably perfluoromethoxyalkylvinylethers of formula CF₂=CFOCF₂OR_{f2}, with R_{f2} being a C₁-C₃ perfluoro(oxy)alkyl group, such as -CF₂CF₃, -CF₂CF₂-O-CF₃ and -CF₃; and
   (f) (per)fluorodioxoles of formula: 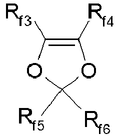 wherein each of R_{f3}, R_{f4}, R_{f5} and R_{f6}, equal to or different from each other, is independently a fluorine atom, a C₁-C₆ perfluoro(oxy)alkyl group, optionally comprising one or more oxygen atoms, such as -CF₃, -C₂F₅, -C ₃F₇, -OCF₃ or -OCF₂CF₂OCF₃; and
- optionally, recurring units derived from one or more than one hydrogenated monomer, as above detailed, including notably ethylene, propylene, (meth)acrylic monomers, styrenic monomers.

More specifically, block (B) may be selected from the group consisting of:
- blocks (B_{VDF}) consisting of a sequence of recurring units derived from vinylidene fluoride and optionally from one or more than one additional fluorinated monomer different from VDF, e.g. HFP, TFE or CTFE, and optionally from a hydrogenated monomer, as above detailed, e.g. a (meth)acrylic monomer, whereas the amount of recurring units derived from VDF is of 85 to 100 % moles, based on the total moles of recurring units of block (B_{VDF});
- blocks (B_{TFE}) consisting of a sequence of recurring units derived from tetrafluoroethylene, and optionally from an additional perfluorinated monomer different from TFE, whereas the amount of recurring units derived from TFE is of 75 to 100 % moles, based on the total moles of recurring units of block (B);
- blocks (B_{E/(C)TFE}) consisting of a sequence of recurring units derived from ethylene and recurring units derived from CTFE and/or TFE, possibly in combination with an additional monomer.

The weight ratio between blocks (A) and blocks (B) in the fluorinated thermoplastic elastomer is typically comprised between 95:5 and 10:90.

According to certain preferred embodiments, the polymers (F-TPE) comprise a major amount of blocks (A); according to these embodiment's, the polymer (F-TPE) used in the method of the present invention is characterized by a weight ratio between blocks (A) and blocks (B) of 95:5 to 65:35, preferably 90:10 to 70:30.

The crystallinity of block (B) and its weight fraction in the polymer (F-TPE) are such to provide for a heat of fusion (ΔH_{f}) of the polymer (F-TPE) of advantageously at most 20 J/g, preferably at most 18 J/g, more preferably at most 15 J/g, when determined according to ASTM D3418; on the other side, polymer (F-TPE) combines thermoplastic and elastomeric character, so as to possess a certain crystallinity, delivering a heat of fusion of at least 2.5 J/g, preferably at least 3.0 J/g.

Preferred polymers (F-TPE) are those comprising:
- at least one elastomeric block (A_{VDF}), as above detailed, and
- at least one thermoplastic block (B_{VDF}), as above detailed, and
wherein the crystallinity of said block (B) and its weight fraction in the polymer (F-TPE) are such to provide for a heat of fusion of the polymer (F-TPE) of at most 15 J/g, when determined according to ASTM D3418.

The polymers (F-TPE) used in the method of the present invention may be manufactured by a manufacturing process comprising the following sequential steps:
(a) polymerizing at least one fluorinated monomer, and possibly at least one bis-olefin (OF), in the presence of a radical initiator and of an iodinated chain transfer agent, thereby providing a pre-polymer consisting of at least one block (A) containing one or more iodinated end groups; and
(b) polymerizing at least one fluorinated monomer, in the presence of a radical initiator and of the pre-polymer provided in step (a), thereby providing at least one block (B) grafted on said pre-polymer through reaction of the said iodinated end groups of the block (A).

The manufacturing process above detailed is preferably carried out in aqueous emulsion polymerization according to methods well known in the art, in the presence of a suitable radical initiator.

The radical initiator is typically selected from the group consisting of:
- inorganic peroxides such as, for instance, alkali metal or ammonium persulphates, perphosphates, perborates or percarbonates, optionally in combination with ferrous, cuprous or silver salts or other easily oxidable metals;
- organic peroxides such as, for instance, disuccinylperoxide, tertbutyl-hydroperoxide, and ditertbutylperoxide; and
- azo compounds (see, for instance, US 2515628 (E. I. DU PONT DE NEMOURS AND CO.) 7/18/1950 and US 2520338 (E. I. DU PONT DE NEMOURS AND CO.) 8/29/1950).

It is also possible to use organic or inorganic redox systems, such as persulphate ammonium/sodium sulphite, hydrogen peroxide/aminoiminomethansulphinic acid.

In step (a) of the manufacturing process as above detailed, one or more iodinated chain transfer agents are added to the reaction medium, typically of formula RₓIₙ, wherein Rₓ is a C₁-C₁₆, preferably a C₁-C₈ (per)fluoroalkyl or a (per)fluorochloroalkyl group, and n is 1 or 2. It is also possible to use as chain transfer agents alkali or alkaline-earth metal iodides, as described in US 5173553 (AUSIMONT S.P.A.) 12/22/1992. The amount of the chain transfer agent to be added is established depending on the molecular weight which is intended to be obtained and on the effectiveness of the chain transfer agent itself.

In any of steps (a) and (b) of the manufacturing process as above detailed, one or more surfactants may be used, preferably fluorinated surfactants of formula:

R_{y}-X⁻ M⁺

wherein Ry is a C₅-C₁₆ (per)fluoroalkyl or a (per)fluoropolyoxyalkyl group, X- is -COO- or -SO₃⁻, and M⁺ is selected from the group consisting of H⁺, NH₄⁺, and an alkali metal ion.

Among the most commonly used surfactants, mention can be made of (per)fluoropolyoxyalkylenes terminated with one or more carboxyl groups.

In the manufacturing process, when step (a) is terminated, the reaction is generally discontinued, for instance by cooling, and the residual monomers are removed, for instance by heating the emulsion under stirring. The second polymerization step (b) is then advantageously carried out, feeding the new monomer(s) mixture and adding fresh radical initiator. If necessary, under step (b) of the process for the manufacture of the polymer (F-TPE), one or more further chain transfer agents may be added, which can be selected from the same iodinated chain transfer agents as defined above or from chain transfer agents known in the art for use in the manufacture of fluoropolymers such as, for instance, ketones, esters or aliphatic alcohols having from 3 to 10 carbon atoms, such as acetone, ethylacetate, diethylmalonate, diethylether and isopropyl alcohol; hydrocarbons, such as methane, ethane and butane; chloro(fluoro)carbons, optionally containing hydrogen atoms, such as chloroform and trichlorofluoromethane; bis(alkyl)carbonates wherein the alkyl group has from 1 to 5 carbon atoms, such as bis(ethyl) carbonate and bis(isobutyl) carbonate. When step (b) is completed, the polymer (F-TPE) is generally isolated from the emulsion according to conventional methods, such as by coagulation by addition of electrolytes or by cooling.

Alternatively, the polymerization reaction can be carried out in mass or in suspension, in an organic liquid where a suitable radical initiator is present, according to known techniques. The polymerization temperature and pressure can vary within wide ranges depending on the type of monomers used and based on the other reaction conditions. Step (a) and/or step (b) of process for the manufacture of the polymer (F-TPE) is typically carried out at a temperature of from -20°C to 150°C; and/or typically under pressures up to 10 MPa.

The manufacturing process as above detailed is preferably carried out in aqueous emulsion polymerization in the presence of a microemulsion of perfluoropolyoxyalkylenes, as described in US 4864006 (AUSIMONT S.P.A.) 9/5/1989 , or in the presence of a microemulsion of fluoropolyoxyalkylenes having hydrogenated end groups and/or hydrogenated recurring units, as described in EP 625526 A (AUSIMONT S.P.A.) 11/23/1994 .

### The composition (C)

As said, composition (C) comprises polymer (F-TPE) as above detailed and a liquid medium.

Depending on the choice of the coating technology, the liquid medium may be effective in suspending and dispersing particles of polymer (F-TPE) or may be effective in solubilizing polymer (F-TPE).

Liquid media able to solubilize polymer (F-TPE) are generally selected among organic solvent.

Exemplary embodiments of organic solvents which may be used, alone or in combination, in the composition of the present invention include notably:
- aromatic hydrocarbons and more particularly aromatic hydrocarbons such as, in particular, benzene, toluene, xylenes, cumene, petroleum fractions composed of a mixture of alkylbenzenes;
- aliphatic or aromatic halogenated hydrocarbons including more particularly, perchlorinated hydrocarbons such as, in particular, tetrachloroethylene, hexachloroethane ; partially chlorinated hydrocarbons such as dichloromethane, chloroform, 1,2-dichloroethane, 1,1,2-trichloroethane, 1,1,2,2-tetrachloroethane, pentachloroethane, trichloroethylene, 1-chlorobutane, 1,2-dichlorobutane ; monochlorobenzene, 1,2-dichlorobenzene, 1,3-dichlorobenzene, 1,4-dichlorobenzene, 1,2,4-trichlorobenzene or mixture of different chlorobenzenes;
- aliphatic, cycloaliphatic or aromatic ether oxides, more particularly, diethyl oxide, dipropyl oxide, diisopropyl oxide, dibutyl oxide, methyltertiobutylether, dipentyl oxide, diisopentyl oxide, ethylene glycol dimethyl ether, ethylene glycol diethyl ether, ethylene glycol dibutyl ether benzyl oxide; 1,4-dioxane, tetrahydrofuran (THF);
- aromatic amines, including notably pyridine, and aniline.
- ketones such as methylethylketone, methylisobutyl ketone, diisobutylketone, cyclohexanone, isophorone;
- linear or cyclic esters such as : isopropyl acetate, n-butyl acetate, methyl acetoacetate, dimethyl phthalate, γ-butyrolactone;
- linear or cyclic carboxamides such as N,N-dimethylacetamide (DMAc), N,N-diethylacetamide, dimethylformamide (DMF), diethylformamide or N-methyl-2-pyrrolidinone (NMP);
- organic carbonates for example dimethyl carbonate, diethyl carbonate, dipropyl carbonate, dibutyl carbonate, ethylmethyl carbonate, ethylene carbonate, vinylene carbonate;
- phosphoric esters such as trimethyl phosphate, triethyl phosphate;
- dimethylsulfoxide (DMSO); and
- diesters of formula (I_{de}), ester-amides of formula (Iₑₐ), or diamides of formula (I_{da}):

   R¹-OOC-A_{de}-COO-R² (I_{de})

   R¹-OOC-Aₑₐ-CO-NR³R⁴ (Iₑₐ)

   R⁵R⁶N-OC-A_{da}-CO-NR⁵R⁶ (I_{da})

   wherein:
   - R¹ and R², equal to or different from each other, are independently selected from the group consisting of C₁-C₂₀ hydrocarbon groups;
   - R³, R⁴, R⁵ and R⁶ equal to or different from each other and at each occurrence, are independently selected from the group consisting of hydrogen, C₁-C₃₆ hydrocarbon groups, possibly substituted, being understood that R³ and R⁴ might be part of a cyclic moiety including the nitrogen atom to which they are bound, said cyclic moiety being possibly substituted and/or possibly comprising one or more than one additional heteroatom, and mixtures thereof;
   - A_{de}, Aₑₐ, and A_{da} equal to or different from each other, are independently a linear or branched divalent alkylene group.

According to certain embodiments, the liquid medium is comprised, or preferably consists of an organic solvent selected among those listed above, and more preferably from ketones, as defined above.

Good results have been obtained when the liquid medium was methylethylketone.

Generally, it is preferred for the liquid medium to be an aqueous medium, that is to say a liquid medium comprising water as major liquid component, and preferably essentially consisting of water (with other minor liquid ingredient being possibly comprised, without these substantially affecting the aqueous character of the medium).

When the liquid medium is an aqueous medium, the composition (C) can be qualified as an "aqueous dispersion", which means that polymer (F-TPE) particles are stably dispersed in an aqueous medium, so that settling of the particles does not occur within the time when the dispersion will be used.

For the purpose of the invention the term "particle" is intended to denote a mass of material that, from a geometrical point of view, has a definite three-dimensional volume and shape, characterized by three dimensions, wherein none of said dimensions exceed the remaining two other dimensions of more than 1000 %. Particles are generally not equidimensional, i.e. that are longer in one direction than in others, and include different shapes, such as spheroidal, rod-like, cobblestone, and the like.

The particles of polymer (F-TPE) in the aqueous dispersion, as above detailed, possess an average particle size of at least 20 nm, preferably at least 30 nm, more preferably at least 50 nm, and/or of at most 450 nm, preferably at most 400 nm, most preferably at most 350 nm.

The aqueous dispersion is generally obtained directly by the process known as dispersion (or emulsion, including micro-emulsion) polymerization (i.e. as crude polymerization latex) or can be obtained from said crude polymerization latex by post-treatment, such as e.g. upconcentration methods (clouding, ultrafiltration...), intended to increase the polymer (F-TPE) concentration in the aqueous medium.

Otherwise, aqueous dispersions can be prepared by any means known to those skilled in the art. The dispersions are usually prepared by means of size-reduction equipment, such as, for example, a high-pressure homogenizer, a colloid mill, a fast pump, a vibratory agitator or an ultrasound device. The dispersions are preferably prepared by means of a high-pressure homogenizer or colloid mill and in a particularly preferred way by means of a high-pressure homogenizer.

The particles of polymer (F-TPE) are generally stabilized in the aqueous medium by colloid chemistry methods using one or more than one surface active agent.

When the composition (C) is an aqueous dispersion, the composition generally comprises at least one non-ionic non-fluorinated surfactant [surfactant (NS)].

The term "at least one non-ionic non-fluorinated surfactant" and "[surfactant (NS)]" is understood to mean that one or more than one surfactant (NS) may be present the aqueous dispersion.

Non-ionic non-fluorinated surfactants [surfactants (NS)] suitable for use in the composition (C) are known in the art. Examples of suitable surfactants (NS) can be notably found in Nonionic Surfactants. Edited by SCHICK, M.J.. Marcel Dekker, 1967. p.76-85 and 103-141..

The surfactant (NS) of the invention is selected generally among those free from aromatic groups. It is well-known that non-ionic non-fluorinated surfactants comprising aromatic moieties may convert into harmful organic aromatic compounds (such as benzene, toluene or xylene) on thermal decomposition, during baking of the polymer (F-TPE). Aqueous dispersions free from aromatic moieties containing surfactants are thus appreciated as more environmental friendly products.

The surfactant (NS) is advantageously selected from the group consisting of fatty alcohol polyethers comprising recurring units derived from ethylene oxide and/or propylene oxide.

The surfactant (NS) advantageously complies with formula (I) here below:
wherein R is a C₈-C₁₈ alkyl 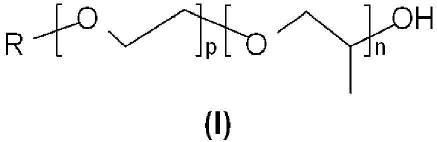 group, p and n, equal or different each other, can be zero or range between 6 and 18, with the provisio that at least one of p and n is different from zero. Preferably the group R is chosen among secondary C₈-C₁₈ alkyl group, tertiary C₈-C₁₈ alkyl group, or mixture thereof, that is to say among groups complying with (a) and/or (b) here below:
   wherein Ra₁, Ra₂, Rb₁, Rb₂, Rb₃, 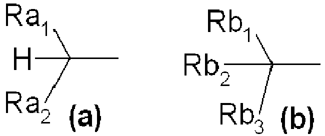 equal or different at each occurrence, are independently a linear or branched alkyl group comprising at least one carbon atom. Still more preferably, R is a secondary C₈-C₁₈ alkyl group, that is to say it complies with formula (a) here above.
wherein R° is a C₉-C₁₅ alkyl group, and q 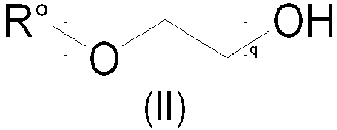 ranges between 7 and 12. Preferably the group R° is chosen among secondary C₉-C₁₅ alkyl group, tertiary C₉-C₁₅ alkyl group, or mixture thereof, that is to say from groups chosen among structures (a) and/or (b) here below:
wherein Ra₁, Ra₂, Rb₁, Rb₂, 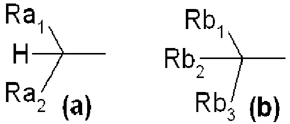 Rb₃, equal or different at each occurrence, are independently a linear or branched alkyl group comprising at least one carbon atom. Still more preferably, R° is a secondary C₉-C₁₅ alkyl group, that is to say it complies with formula (a) here above.

Even more preferably, the surfactant (NS) complies with formula (III) here below: wherein q has the same 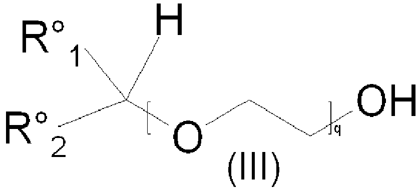 meaning as above defined and each of R°₁ and R°₂, equal or different each other, is independently a C₂-C₁₂ alkyl group, preferably branched. Surfactants (NS) complying with formula (III) here above are notably derived from secondary fatty alcohols and are particularly effective in delivering increased shear stability at a given ethylene oxide content.

Most preferably, the surfactant (NS) complies with formula (IV) here below:
wherein m ranges between 7 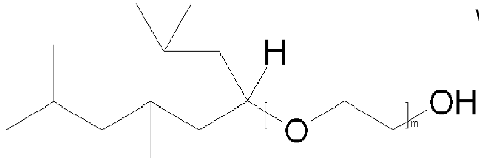 and 12. Surfactants (NS) complying with formula (IV) here above are notably derived from 2,6,8-trimethyl-4-nonanol.

Surfactants (NS) have a cloud point, measured according to EN 1890 standard (method A: 1 % wt water solution), of advantageously 50°C or more, preferably of 55 °C or more, even more preferably of 60 °C or more, most preferably of 65°C or more.

A surfactant (NS) which gave very good results in the process of the invention is the TERGITOL™ TMN-X100 surfactant, commercially available from Dow Chemicals, having a HLB of 14.1, a cloud point of 65°C and complying with formula (IV) here above, wherein m is equal to about 10.1.

For the avoidance of doubt, HLB is the hydrophilic-lipophilic balance (HLB) which can be determined using the Water-Solubility Method, "The HLB System," ICI Americas, Inc., 1992.

When present, the surfactant (NS) is contained in the composition (C) in an amount effective to stabilize the aqueous dispersion of polymer (F-TPE), so as to ensure suitable shelf-life and enable easy processing in the coating method of the invention.

The actual amount of surfactant (NS) would be easily determined by the skilled in the art upon the nature of the surfactant (NS) employed and the nature and concentration of the aqueous dispersion (D).

Generally, the surfactant (NS) is added in an amount of advantageously from 1 to 20%, preferably 1.5 to 15 %, more preferably from 2 to 10 % by weight of polymer (F-TPE).

The composition (C) can additionally comprise at least one pigment; pigments useful in the composition of the invention notably include, or will comprise, one or more of the following : titanium dioxide which is notably available form Whittaker, Clark & Daniels, South Plainfield, New Jersey, USA; Artic blue #3, Topaz blue #9, Olympic blue #190, Kingfisher blue #211, Ensign blue #214, Russet brown #24, Walnut brown #10, Golden brown #19, Chocolate brown #20, Ironstone brown #39, Honey yellow #29, Sherwood green #5, and Jet black #1 available from Shepherd Color Company, Cincinnati, Ohio, USA.; black F-2302, blue V-5200, turquoise F-5686, green F-5687, brown F-6109, buff F-6115, chestnut brown V-9186, and yellow V-9404 available from Ferro Corp., Cleveland, Ohio, USA and METEOR® pigments available from Engelhard Industries, Edison, New Jersey, USA.

Still, the composition can comprise at least one of the following:
- an inorganic filler, preferably selected from mica fillers, more preferably from mica fillers coated with metal oxides; fillers of this type are notably available under brad name IRIODIN® from Merk;
- a rheology modifier, preferably selected from modified polyamides, modified urea; polyethylene waxes, organic derivatives of bentonite clays;
- a defoaming agent, preferably selected from polydimethyl siloxanes, in particular modified polydimethyl siloxanes, fluorinated silicones; and
- a surfactant, preferably selected from alkyl ethoxylated alcohols, alkylphenol ethoxylated alcohols.

The composition (C) can be prepared by mixing the polymer (F-TPE), the liquid medium and, when present, all other additional ingredients.

### The surface (S)

The surface (S) is generally a metal surface, including notably surfaces of aluminium, copper, tin, zinc, iron, and alloys thereof, including steel, and stainless steel.

The surface (S) is generally suitably degreased and cleaned before applying a coating of composition (C) on the same.

A step of roughening may be applied for increasing adhesion, although this being not specifically required.

### The method of forming a coating layer

Coating of composition (C) onto at least a part of the surface (S) can be achieved by means of any coating method, including notably spray coating, spin-coating, brush-coating, and the like.

The method of the invention comprises a subsequent step of drying said wet coating layer and heat treating the same at a temperature exceeding 150°C for forming the layer (L) onto the surface (S).

Drying and heat treatment step may be simultaneously achieved or maybe separated steps, carried out in sequential order, drying first, and heat treating at temperature exceeding 150°C next.

Drying can be carried out at temperatures ranging from room temperature to beyond boiling point of the liquid medium, and is intended advantageously to remove all volatile materials contained in the composition. It is nevertheless essential for the simultaneous or subsequent heat treatment to be carried out at a temperature of exceeding 150°C, preferably exceeding 160°C, more preferably exceeding 180°C, even more preferably exceeding 190°C.

The Applicant has surprisingly found that solely when completed such heat treatment at a temperature of at least 150°C, the layer (L) exhibit outstanding adhesion to the metal substrate.

The coating layer so formed (layer (L)) or the wet coating layer (layer (WC)) can be further coated with an additional layer of polymer, preferably of a fluoropolymer, so as to provide an outer fluoropolymer layer assembled onto the dried or wet coating layer onto the surface. The fluoropolymer used for this coating step is generally selected from fluoropolymers which may be elastomeric or thermoplastic in nature. Said outer coating layer of fluoropolymer can be notably applied onto the said dried or wet coating layer by powder coating, spray coating or any other coating technique. Nevertheless, methods whereas the layer (L) is the sole layer adhered to the surface (S) are generally preferred.

Layer (L) may have various thicknesses; generally layer (L) will have a thickness of at least 3 µm, preferably at least 5 µm, more preferably at least 6 µm. Upper boundaries for layer (L) thickness is not specifically restricted, and, if needed through successive coating steps, the layer (L) can be made up to a thickness of at most 300 µm, preferably at lost 250µm. Nevertheless thicknesses of up to 100 µm are recurrent, especially when layer (L) is applied with only one coating step.

### The assembly of a coating layer onto a surface

As mentioned, the invention further pertains to an assembly including a coating layer [layer (L)] adhered at least a part of the surface [surface (S)] of a substrate, whereas the layer (L) is made from a composition comprising at least one fluorinated thermoplastic elastomer [polymer (F-TPE)] comprising:
(i) at least one elastomeric block (A) consisting of a sequence of recurring units, said sequence comprising recurring units derived from at least one fluorinated monomer, said block (A) possessing a glass transition temperature of less than 25°C, as determined according to ASTM D3418, and
(ii) at least one thermoplastic block (B) consisting of a sequence of recurring units, said sequence comprising recurring units derived from at least one fluorinated monomer,
wherein the crystallinity of said block (B) and its weight fraction in the polymer (F-TPE) are such to provide for a heat of fusion of the polymer (F-TPE) of at least 2.5 J/g, when determined according to ASTM D3418; and
wherein said coating layer possesses an adhesion of at least 80 % retained adhered coating, when determined via the cross cut test, according to ASTM D3359.

The said assembly can be obtained by the method of forming a coating layer onto a surface as described above.

All preferred embodiment's which have been described above for polymer (F-TPE), layer (L) and surface (S) in connection with the method of the invention are also applicable for characterizing the assembly of the invention.

The invention will be now described in more detail with reference to the following examples whose purpose is merely illustrative and not limitative of the scope of the invention.

### Preparative Example 1: synthesis of the polymer (F-TPE-1)

In a 10 liters reactor *eguipped* with a mechanical stirrer operating at 545 rpm, 5.3 I of demineralized water were introduced.

The reactor was heated and maintained at a set-point temperature of 70°C; a mixture of vinylidene fluoride (VDF) (78.5% moles) and hexafluoropropylene (HFP) (21.5% moles) was then added to reach a final pressure of 25 bar. Then, 8.2 g of 1,4-diiodoperfluorobutane (C₄F₈I₂) as chain transfer agent were introduced, and 2.3 g of ammonium persulfate (APS) as initiator were introduced. Pressure was maintained at a set-point of 25 bar by continuous feeding of a gaseous mixture of vinylidene fluoride (VDF) (78.5% by moles) and hexafluoropropylene (HFP) (21.5% by moles) up to a total of 1400 g. Once 1400 g of monomer mixture were fed to the reactor, the reaction was discontinued by cooling the reactor to room temperature. The residual pressure was then discharged and the temperature brought to 75°C. VDF was then fed into the autoclave up to a pressure of 20 bar, and 0.14 g of ammonium persulfate (APS) as initiator were introduced. Pressure was maintained at a set-point of 20 bar by continuous feeding of VDF up to a total of 600 g. Then, the reactor was cooled, vented and the latex recovered.

The latex was found to have a solid content of 28 % wt and to comprise particles having an average primary particle size of 404 nm.

A sample of the latex was treated with aluminum sulphate, separated from the aqueous phase, washed with demineralized water and dried in a convection oven at 60°C for 16 hours. Results are summarized in Table 1.

### Characterization of materials produced in the examples

### Determination of thermal properties

Thermal properties have been determined by differential scanning calorimetry pursuant to ASTM D3418 standard.

**Table 1**

| | | **Pr. Ex. 1** | |
|---|---|---|---|
| Tg | [°C] | -17.3 | |
| Tₘ | [°C] | 159.2 | |
| ΔHₘ | [J/g] | 12.6 | |

| **Recurring units** | | block (A) | block (B) |
|---|---|---|---|
| fraction | [% wt] | 70 | 30 |
| VDF | [% mol] | 78.5 | 100 |
| HFP | [% mol] | 21.5 | - |

### Upconcentration and formulation of the latex

The aqueous latex obtained by the process for manufacturing the polymer (F-TPE-1) was concentrated via clouding technology. The latex was stabilized by addition of the non-ionic surfactant Tergitol® TMN 100x (5%w on the latex); then, the dispersion was put into a glass concentrator under stirring and heated up at 65°C, until a phase separation was observed. When initial separation was noticed, the stirring and heating were stopped and the latex was gradually cooled until room temperature: during cooling, the progressive latex separation into the two phases was completed. The upper phase consisted essentially of water and surfactant, meanwhile the bottom phase consisted of upconcentrated latex, which was hence recovered by phase separation. The final polymer concentration in up-concentrated latex was 58.0%wt, with a non-ionic surfactant concentration equal to 3.0%wt.

### Coating procedure

The up-concentrated latex was applied on Q-panel® chromated aluminum test substrates: the latex was casted on the metal substrate, in a manner so as to completely coat the surface. The coated panels were left to dry at room temperature for 6-8 hours in air, keeping the panels inclined (20-30°) in order to obtained a film with thickness gradient, as naturally generated by gravity. The dry panels were then baked at 200°C for 10 minutes, (Example 1), or at 120°C for same 10 minutes (Comparative Example 1). After cooling, the coatings resulted to have thicknesses ranging from 10 and 20 µm.

### Cross-cut adhesion test

Adhesion performances of the coatings were determined via the cross cut test, according to ASTM D3359, Test Method B. A crosshatch patter is created through the coating, by making eleven parallel incision lines, 1 mm apart from each other. Similar eleven cuts were done at 90 °, crossing the first ones. A pressure sensitive adhesive tape was then applied onto the cut surface and then it was removed. The percentage of coating remaining adhered onto the substrate was determined as fraction of the entire section were cross-cut was applied, the higher the adhered residual percentage, the better the adhesion. This test for assessing adhesion was performed on at least 3 coated panels.

### Determination of Pencil Hardness

The coated panel was subjected to a pencil hardness test according to ASTM D 3363 to evaluate the coating hardness.

### Pendulum hardness

The pendulum damping test has been used following ASTM D4366 standard procedure (test method A - König Pendulum Hardness) to detect differences in coating hardness of the film, where hardness is defined as resistance to its deformation. The amplitude of oscillation of a pendulum touching a surface decreases more rapidly the softer the surface of the film.

### Block Test

The block test was carried out following ASTM D3003, although test conditions were adapted for the specific case. Two coated panels were put in contact (the two coated films face to face) and then subjected to a specific pressure (1.4 kg) and temperature (105°C) for 12 hours. Then, the samples were cooled at room temperature and examined for any sign of sticking or blocking.

### Comparative Example 2

A coating was obtained by casting an aqueous dispersion comprising Tecnoflon® TN latex, a commercially available fluoroelastomer latex from Solvay Specialty Polymers, on Q-panel® chromated aluminum test substrate and drying at room temperature followed by thermal treatment at 200°C for 10 minutes.

Results of characterizations made on coating from both compositions based on polymer (F-TPE-1) (Ex. 1 and Ex. 1C, differing because of temperature of thermal treatment) and on Tecnoflon® TN latex (Ex. 2C) are summarized in Table below:

**Table 2**

| **Run** | **Cross-cut (%)** | **Pendulum hardness (n)** | **Pencil hardness** | **Block test** |
|---|---|---|---|---|
| **Ex. 1** | > 90 | 22 | H | OK¹ |
| **Ex. 1C** | < 10 | n.d. | n.d. | n.d. |
| **Ex. 2C** | < 10 | 17 | H | KO² |

| | | | | |
|---|---|---|---|---|
| ¹: OK = panels put apart easily; ²: KO = panels pull apart using certain force and flexing required. | | | | |

Data above well demonstrate that the temperature of thermal treatment for fluorinated thermoplastic elastomers is a key parameter to achieve good adhesion, which is not obtained either at lower temperatures of treatment or when using a normal fluoroelastomer latex in same conditions.

Further, the coating obtained according the inventive method possesses improved pendulum hardness, and successfully passed block test, showing hence achievement of interesting mechanical and anti-stick properties.

## Claims

1. A method for forming an assembly including a coating layer [layer (L)] adhered at least a part of the surface [surface (S)] of a substrate, said method comprising:
- forming a wet coating layer [layer (WC)] onto at least a part of said surface (S) by coating a composition (C) [composition (C)] onto at least a part of said surface, said composition (C) comprising a liquid medium and at least one fluorinated thermoplastic elastomer [polymer (F-TPE)] comprising:
(i) at least one elastomeric block (A) consisting of a sequence of recurring units, said sequence comprising recurring units derived from at least one fluorinated monomer, said block (A) possessing a glass transition temperature of less than 25°C, as determined according to ASTM D3418, and
(ii) at least one thermoplastic block (B) consisting of a sequence of recurring units, said sequence comprising recurring units derived from at least one fluorinated monomer,
wherein the crystallinity of said block (B) and its weight fraction in the polymer (F-TPE) are such to provide for a heat of fusion of the polymer (F-TPE) of at least 2.5 J/g, when determined according to ASTM D3418; and
- drying and heat treating at a temperature of at least 150°C the said layer (WC) onto said surface (S) to form said layer (L).

2. The method of Claim 1, wherein the polymer (F-TPE) of the composition (C) is a block copolymer, said block copolymer having a structure comprising at least one block (A) alternated to at least one block (B), that is to say that said fluorinated thermoplastic elastomer comprises, preferably consists of, one or more repeating structures of type (B)-(A)-(B).

3. The method of Claim 2, wherein the polymer (F-TPE) comprises, preferably consists of:
- at least one elastomeric block (A) selected from the group consisting of:
(1) vinylidene fluoride (VDF)-based elastomeric blocks (A_{VDF}) consisting of a sequence of recurring units, said sequence comprising recurring units derived from VDF and recurring units derived from at least one fluorinated monomer different from VDF, said fluorinated monomer different from VDF being typically selected from the group consisting of:
(a) C₂-C₈ perfluoroolefins such as tetrafluoroethylene (TFE), hexafluoropropylene (HFP);
(b) hydrogen-containing C₂-C₈ fluoroolefins different from VDF, such as vinyl fluoride, trifluoroethylene (TrFE), hexafluoroisobutylene (HFIB), perfluoroalkyl ethylenes of formula CH₂=CH-R_{f1}, wherein R_{f1} is a C₁-C₆ perfluoroalkyl group;
(c) C₂-C₈ chloro- and/or bromo-containing fluoroolefins such as chlorotrifluoroethylene (CTFE);
(d) perfluoroalkylvinylethers (PAVE) of formula CF₂=CFOR_{f1}, wherein R_{f1} is a C₁-C₆ perfluoroalkyl group, such as CF₃ (PMVE), C₂F₅ or C₃F₇;
(e) perfluorooxyalkylvinylethers of formula CF₂=CFOX₀, wherein X₀ is a a C₁ -C₁₂ perfluorooxyalkyl group comprising one or more than one ethereal oxygen atom, including notably perfluoromethoxyalkylvinylethers of formula CF₂ =CFOCF₂OR_{f2}, with R_{f2} being a C₁-C₃ perfluoro(oxy)alkyl group, such as -CF ₂CF₃, -CF₂CF₂-O-CF₃ and -CF₃; and
(f) (per)fluorodioxoles of formula: 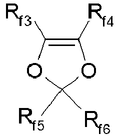 wherein each of R_{f3}, R_{f4}, R_{f5} and R_{f6}, equal to or different from each other, is independently a fluorine atom, a C₁-C₆ perfluoro(oxy)alkyl group, optionally comprising one or more oxygen atoms, such as -CF₃, -C₂F₅, -C₃F₇, -OCF₃ or -OCF₂CF₂OCF₃; and
(2) tetrafluoroethylene (TFE)-based elastomeric blocks (A_{TFE}) consisting of a sequence of recurring units, said sequence comprising recurring units derived from TFE and recurring units derived from at least one fluorinated monomer different from TFE, said fluorinated monomer being typically selected from the group consisting of those of classes (b), (c), (d), (e) as defined above;
- at least one thermoplastic block (B) consisting of a sequence of recurring units derived from at least one fluorinated monomer.

4. The method of Claim 3, wherein the elastomeric block (A) is a block (A_{VDF}), said block (A_{VDF}) consisting of a sequence of recurring units comprising, preferably consisting of:
- from 45% to 80% by moles of recurring units derived from vinylidene fluoride (VDF),
- from 5% to 50% by moles of recurring units derived from at least one fluorinated monomer different from VDF,
- optionally, up to 1.0 % by moles of recurring units derived from at least one bis-olefin (OF), as above detailed; and
- optionally, up to 30% by moles of recurring units derived from at least one hydrogenated monomer,
with respect to the total moles of recurring units of the sequence of block (A VDF).

5. The method of anyone of the preceding claims, wherein block (B) consists of a sequence of recurring units, said sequence comprising:
- recurring units derived from one or more than one fluoromonomer, preferably selected from the group consisting of:
(a) C₂-C₈ perfluoroolefins such as tetrafluoroethylene (TFE), hexafluoropropylene (HFP);
(b) hydrogen-containing C₂-C₈ fluoroolefins, such as vinylidene fluoride (VDF), vinyl fluoride, trifluoroethylene (TrFE), hexafluoroisobutylene (HFIB), perfluoroalkyl ethylenes of formula CH₂=CH-R_{f1}, wherein R_{f1} is a C₁-C₆ perfluoroalkyl group;
(c) C₂-C₈ chloro- and/or bromo-containing fluoroolefins such as chlorotrifluoroethylene (CTFE);
(d) perfluoroalkylvinylethers (PAVE) of formula CF₂=CFOR_{f1}, wherein R_{f1} is a C₁-C₆ perfluoroalkyl group, such as CF₃ (PMVE), C₂F₅ or C₃F₇;
(e) perfluorooxyalkylvinylethers of formula CF₂=CFOX₀, wherein X₀ is a a C₁ -C₁₂ perfluorooxyalkyl group comprising one or more than one ethereal oxygen atom, including notably perfluoromethoxyalkylvinylethers of formula CF₂ =CFOCF₂OR_{f2}, with R_{f2} being a C₁-C₃ perfluoro(oxy)alkyl group, such as -CF ₂CF₃, -CF₂CF₂-O-CF₃ and -CF₃; and
(f) (per)fluorodioxoles of formula:
wherein each of R_{f3}, R_{f4}, R_{f5} and R_{f6}, equal to or different from each other, is independently a fluorine atom, a C₁-C₆ perfluoro(oxy)alkyl group, optionally comprising one or more oxygen atoms, such as -CF₃, -C₂F₅, -C₃F₇, -OCF₃ or -OCF₂CF₂OCF₃; and
- optionally, recurring units derived from one or more than one hydrogenated monomer, as above detailed, including notably ethylene, propylene, (meth)acrylic monomers, styrenic monomers.

6. The method of Claim 5, wherein block (B) is selected from the group consisting of:
- blocks (B_{VDF}) consisting of a sequence of recurring units derived from vinylidene fluoride and optionally from one or more than one additional fluorinated monomer different from VDF, e.g. HFP, TFE or CTFE, and optionally from a hydrogenated monomer, as above detailed, e.g. a (meth)acrylic monomer, whereas the amount of recurring units derived from VDF is of 85 to 100 % moles, based on the total moles of recurring units of block (B_{VDF});
- blocks (B_{TFE}) consisting of a sequence of recurring units derived from tetrafluoroethylene, and optionally from an additional perfluorinated monomer different from TFE, whereas the amount of recurring units derived from TFE is of 75 to 100 % moles, based on the total moles of recurring units of block (B);
- blocks (B_{E/(C)TFE}) consisting of a sequence of recurring units derived from ethylene and recurring units derived from CTFE and/or TFE, possibly in combination with an additional monomer.

7. The method of Claim 6, whereas polymer (F-TPE) is selected from the group consisting of those comprising:
- at least one elastomeric block (A_{VDF}), as defined in Claim 4, and
- at least one thermoplastic block (B_{VDF}), as defined in Claim 6, and
wherein the crystallinity of said block (B) and its weight fraction in the polymer (F-TPE) are such to provide for a heat of fusion of the polymer (F-TPE) of at most 15 J/g, when determined according to ASTM D3418.

8. The method according to anyone of the preceding claims, wherein the liquid medium is an aqueous medium, that is to say a liquid medium comprising water as major liquid component, and preferably essentially consisting of water, and wherein the composition (C) is an aqueous dispersion, whereas particles of polymer (F-TPE) are stably dispersed in said aqueous medium.

9. The method of claim 8, whereas the particles of polymer (F-TPE) possess an average particle size of at least 20 nm, preferably at least 30 nm, more preferably at least 50 nm, and/or of at most 450 nm, preferably at most 400 nm, most preferably at most 350 nm.

10. The method of claim 8 or 9, wherein the composition (C) comprises at least one non-ionic non-fluorinated surfactant [surfactant (NS)], and wherein the surfactant (NS) is preferably selected from the group consisting of fatty alcohol polyethers comprising recurring units derived from ethylene oxide and/or propylene oxide.

11. The method according to anyone of the preceding claims, wherein the surface (S) is a metal surface, selected from the group consisting of surfaces of aluminium, copper, tin, zinc, iron, and alloys thereof, including steel, and stainless steel.

12. The method according to anyone of the preceding claims, wherein coating of composition (C) onto at least a part of the surface (S) is achieved by means of any coating method, including notably spray coating, spin-coating, brush-coating.

13. The method according to anyone of the preceding claims, wherein drying and heat treatment step are simultaneously achieved or are separated steps, carried out in sequential order, drying first, and heat treating at temperature exceeding 150°C next.

14. An assembly including a coating layer [layer (L)] adhered at least a part of the surface [surface (S)] of a substrate, whereas the layer (L) is made from a composition comprising at least one fluorinated thermoplastic elastomer [polymer (F-TPE)] comprising:
(i) at least one elastomeric block (A) consisting of a sequence of recurring units, said sequence comprising recurring units derived from at least one fluorinated monomer, said block (A) possessing a glass transition temperature of less than 25°C, as determined according to ASTM D3418, and
(ii) at least one thermoplastic block (B) consisting of a sequence of recurring units, said sequence comprising recurring units derived from at least one fluorinated monomer,
wherein the crystallinity of said block (B) and its weight fraction in the polymer (F-TPE) are such to provide for a heat of fusion of the polymer (F-TPE) of at least 2.5 J/g, when determined according to ASTM D3418; and
wherein said coating layer possesses an adhesion of at least 80 % retained adhered coating, when determined via the cross cut test, according to ASTM D3359.

15. The assembly of Claim 14, wherein the layer (L) has a thickness of at least 3 µm, preferably at least 5 µm, more preferably at least 6 µm, and/or of at most 300 µm, preferably at lost 250 µm.
